# NEUE EUROPÄISCHE PATENTSCHRIFT

(11) **EP 1 462 894 B2**
(45) Veröffentlichungstag und Bekanntmachung des Hinweises auf die Entscheidung über den Einspruch: **26.06.2019**
(45) Hinweis auf die Patenterteilung: 21.10.2015
(21) Anmeldenummer: 04006337.2
(22) Anmeldetag: 17.03.2004
(51) Int. Cl.: G05B 19/418

(54) **Produktions- und / oder Verpackungsanlage sowie verfahren zu deren Betrieb**
Production and / or packaging machine and method of operation
Machine de production et / ou emballage et méthode d'opération

(30) Priorität: 25.03.2003 DE 10313393
(43) Veröffentlichungstag der Anmeldung: 29.09.2004
(73) Patentinhaber: Focke & Co. (GmbH & Co. KG), 27283 Verden (DE)
(72) Erfinder: Focke, Heinz, 27283 Verden (DE); Olbrich, Hartmut, 27283 Verden (DE); Schröder, Cord, 31582 Nienburg (DE)
(74) Vertreter: Aulich, Martin

(56) Entgegenhaltungen:
- EP-A- 0 614 814
- EP-A1- 1 248 190
- DE-A1- 19 635 598
- US-A- 4 865 179
- US-A- 5 113 821
- US-B1- 6 516 811

## Beschreibung

Die Erfindung betrifft eine Produktions- und/oder Verpackungsanlage gemäß dem Oberbegriff des Anspruchs 1 sowie ein Verfahren zu deren Betrieb. Derartige Produktions- und/oder Verpackungsanlagen sind im Stand der Technik bekannt.

Der Erfindung liegt die Aufgabe zugrunde, eine Produktions- und/oder Verpackungsanlage, die eine Leistungsbegrenzung beinhaltet, sowie ein Verfahren zu deren Betrieb anzugeben, so dass diese einem Erwerber unter Zusicherung einer bestimmten Leistungsfähigkeit verkauft werden und nur die zugesicherte Leistung abgerufen werden kann.

Leistungsbegrenzungen allgemeiner Art sind im Stand der Technik in unterschiedlichen Ausführungsformen bekannt. Z.B. ist bei Fahrzeugen eine Leistungsbegrenzung derart bekannt, dass bei Erreichen einer vorgegebenen Maximalgeschwindigkeit die Kraftstoffzufuhr abgeriegelt wird, so dass die Maximalgeschwindigkeit nicht überschritten werden kann. Des Weiteren ist bei sogenannter Shareware, also zunächst frei verfügbarer Software, vorgesehen, dass diese einen begrenzten Leistungsumfang aufweist. Erst nach Zahlung eines Kaufpreises erhält der Besitzer der Software eine Code-Nummer um bei unveränderter Software den kompletten Leistungsumfang frei zu schalten.

Eine Leistungsbegrenzung bei einer Produktions- und Verpackungsanlage ist bisher nicht bekannt geworden. Zudem sind die bekannten Leistungsbegrenzungen mit einer solchen für eine Produktions- und Verpackungsanlage nicht vergleichbar. Bei der Shareware wird stets nur das Vorhandensein der Code-Nummer überprüft. Eine Abfrage der von der Software abgerufenen Leistung erfolgt nicht. Beim Fahrzeug wird eine Form der abrufbaren Leistung, nämlich die gefahrene Geschwindigkeit, überprüft. Beim Maximalwert der abrufbaren Leistung handelt es sich allerdings nicht um eine einem Erwerber des Fahrzeugs zugesicherte Leistung sondern um eine sicherheitsbezogene Geschwindigkeitsobergrenze.

In der US 6,516,811 B1 ist eine Produktions- und Verpackungsanlage zur Herstellung und Verpackung von Zigaretten offenbart, bei der abhängig von einer zu fertigenden Endmenge diejenigen Materialmengen berechnet werden, die einzelnen Fertigungseinheiten der Fertigungs- und Verpackungsanlage zur Verfügung gestellt werden müssen. Dabei werden unter anderem erwartete und während der Fertigung tatsächlich entstandene Fehlproduktionen berücksichtigt. Eine Begrenzung der Leistung der Anlage unterhalb einer möglichen Maximalleistung ist nicht vorgesehen.

Die oben genannte Aufgabe wird erfindungsgemäß mit den Merkmalen des Anspruchs 1, mit einem Verfahren mit den Merkmalen des Anspruchs 6 gelöst.

Die Erfindung geht von der Erkenntnis aus, dass bisher Produktions- und Verpackungsanlagen im Hinblick auf die vom jeweiligen Kunden benötigte Leistungsfähigkeit gefertigt werden. Das führt dazu, dass ein Hersteller solcher Anlagen unterschiedliche Typen von Anlagen mit unterschiedlichen Leistungsdaten fertigt. Dies ist aufgrund des sich damit ergebenden Mehraufwands bei der Entwicklung, Qualitätssicherung, Dokumentation, Lagerhaltung, etc. nachteilig. Für den Kunden ergibt sich zudem die Situation, dass eine in Betrieb befindliche Anlage häufig nicht einfach auf eine höhere Leistung aufgerüstet werden kann. Es ist dann ein Austausch von zumindest Teilen der Anlage erforderlich, was in nachteiliger Weise zu Stillstandszeiten der Anlage führt.

Der Vorteil der Erfindung besteht darin, dass nur noch eine verringerte Anzahl von Anlagentypen, vorzugsweise nur noch ein Anlagentyp, mit einer skalierbaren Leistung gefertigt wird. Die Anlage wird für den jeweiligen Kunden entsprechend der benötigten Leistung eingestellt. Die Anlage umfasst Vorrichtungen und Mittel um Manipulationen der Leistungseinstellung zu erkennen und um sicherzustellen, dass bei der Anlage keine über die zugesicherte Leistung hinausgehende Mehrleistung abrufbar ist. Wenn eine einmal erworbene Leistung für den Kunden zu einem späteren Zeitpunkt nicht mehr ausreicht, kann die Leistungsbegrenzung entfernt werden oder die Leistung der Anlage auf eine höhere Leistung beschränkt werden. Des Weiteren ist auch eine kurzfristige Erhöhung der abrufbaren Leistung denkbar. Dazu sind z.B. in der Anlagensteuerung Codenummern hinterlegt. Der Betreiber der Anlage kann beim Hersteller eine Codenummer erfragen und diese in die Steuerung eingeben. Bei Übereinstimmung der eingegebenen Codenummer mit einer gespeicherten Codenummer kann bei der Anlage kurzfristig, also während eines begrenzten Zeitraums, eine höhere Leistung abgerufen werden. Dabei kann vorgesehen sein, dass der Betreiber der Anlage eine Codenummer beim Hersteller käuflich erwirbt. Eine benutzte Codenummer wird in der Anlagensteuerung automatisch deaktiviert. Des Weiteren können unterschiedliche Kategorien von Codenummern vorgesehen sein, wobei eine erste Kategorie eine Leistungserhöhung für einen begrenzten Zeitraum geringer Dauer, z.B. wenige Tage oder wenige Schichten, eine zweite Kategorie eine gesteigerte Leistungserhöhung usw. ermöglicht. Anstelle einer zeitlich spezifizierten kurzfristigen Leistungserhöhung kommt auch eine mengenmäßig spezifizierte kurzfristige Leistungserhöhung in Betracht.

Eine Besonderheit des erfindungsgemäßen Verfahrens besteht darin, dass das die zugesicherte Leistung sich auf ein Produktionsergebnis, also z.B. eine Anzahl von (Zigaretten-) Packungen, die vorgegebenen Kriterien entsprechen, bezieht. Der Betreiber der Anlage kann also von sicheren Produktionszahlen ausgehen, weil die Arbeitsgeschwindigkeit der Anlage automatisch derart geregelt wird, dass in einer bestimmten Zeitspanne, die zugesicherte Leistung, also die Anzahl ordnungsgemäßer Packungen erstellt wird. Damit sind sogar Maschinenstillstandszeiten kompensierbar.

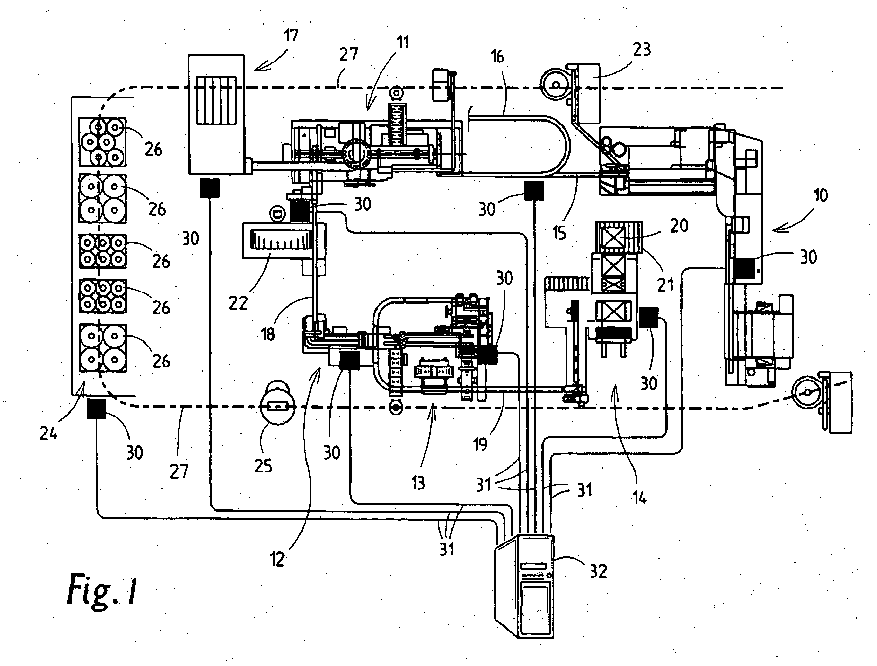

Nachfolgend wird ein bevorzugtes Ausführungsbeispiel der Erfindung anhand der Zeichnung näher erläutert. Darin zeigen
- Fig. 1: eine Fertigungs- und Verpackungsanlage für Zigaretten im schematischen Grundriss,
- Fig. 2: einen Ausschnitt aus der Fertigungs- und Verpackungsanlage in schematischer Darstellung,
- Fig. 3: eine weitere schematische Darstellung der Fertigungs- und Verpackungsanlage mit einzelnen Fertigungseinheiten und einer Leistungskontrolleinrichtung,
- Fig. 4: eine Darstellung eines Produktionsverlaufs bei einer zugesicherten Leistung der Fertigungs- und Verpackungsanlage in Form einer bestimmten Anzahl ordnungsgemäßer (Zigaretten-)Packungen,
- Fig. 5: eine Einrichtung zum Überprüfen von (Zigaretten-)Packungen und
- Fig. 6: eine Verpackungsmaschine (Packer) der Fertigungs- und Verpackungsanlage.

Das in den Zeichnungen dargestellte Ausführungsbeispiel betrifft eine Fertigungs- und Verpackungsanlage für Zigaretten, also eine sogenannte Linie. Diese umfasst Fertigungseinheiten, beispielsweise eine Zigarettenherstellmaschine, nämlich einen Maker 10, eine an diese anschließende Verpackungsmaschine, einen Packer 11, eine nachfolgende Folieneinschlagmaschine 12, eine Verpackungsmaschine zum Herstellen Gebinden aus mehreren Zigarettenpackungen, also einen Stangenpacker 13 und einen Kartonierer 14, der Packungsgebinde, also Zigarettenstangen, in einen Versandkarton verpackt. Vom Maker 10 gefertigte Zigaretten werden von einem Zigarettenförderer 15 mit einem zugeordneten Zigarettenspeicher 16 dem Packer 11 zum Fertigen von Klappschachteln, sogenannten Hinge-Lid Packungen zugeführt. Dem Packer 11 ist ein Zuschnittspeicher 17 zugeordnet, also eine Einrichtung zur Aufnahme eines größeren Vorrats an vorgefertigten Zuschnitten für die Klappschachteln. Die durch den Packer 11 gefertigten Zigarettenpackungen werden über einen Packungsförderer 18 der Folieneinschlagmaschine 12 zugeführt. Diese hat die Aufgabe, die Zigarettenpackungen in einen Folien- oder Kunststoffzuschnitt einzuhüllen. Aus den fertig gestellten Zigarettenpackungen werden Packungsgruppen gebildet, die im Bereich des Stangenpackers 13 mit einer Gebindeumhüllung versehen werden und somit eine Zigarettenstange aus üblicherweise zehn Zigarettenpackungen ergeben. Diese Zigarettenstangen werden durch einen Stangenförderer 19 dem Kartonierer 14 zugeführt. Dieser übergibt fertige Versandkartons mit einer Mehrzahl von Zigarettenstangen an einen Versandkartonabförderer 21. Im Bereich des Packungsförderers 18 zwischen Packer 11 und Folieneinschlagmaschine 12 befindet sich ein Packungsspeicher 22 für die Aufnahme einer größeren Anzahl von Zigarettenpackungen. Dem Maker 10 ist eine Filteransetzmaschine 23 zugeordnet. Die beschriebenen Fertigungseinheiten werden aus einem Materiallager 24 mittels eines Materialförderers 25 mit Material, insbesondere in Form von gewickelten Bahnen, nämlich Bobinen 26, entnehmbar versorgt. Dazu ist der Materialförderer 25 entlang eines Förderbandes 27 beweglich.

Den einzelnen Fertigungseinheiten, nämlich Maker 10, Packer 11, Folieneinschlagmaschine 12, Stangenpacker 13, Kartonierer 14, Zigarettenförderer 15 und Zigarettenspeicher 16 sowie dem Zuschnittspeicher 17 sind Steuerungen 30 zum Aufnehmen von Daten (Eingangswerten) von der einzelnen Fertigungseinheit und zum Beeinflussen der Fertigungseinheit mit Ausgangswerten, also z.B. digitalen Ausgangswerten zum Ein- oder Ausschalten einzelner Organe der Fertigungseinheit oder analogen Ausgangswerten zur Vorgabe von Soll- oder Führungswerten, wie z.B. Temperaturen, Geschwindigkeiten, vorgesehen. Die Steuerungen 30 sind untereinander sowie mit einer übergeordneten Steuerung 32 über einen Bus 31, insbesondere einen Feldbus, kommunikativ verbunden. Die einzelnen Fertigungseinheiten arbeiten in der Linie koordiniert, d.h. insbesondere die Geschwindigkeiten der Fertigungseinheiten sind derart aufeinander abgestimmt, dass eine einer zentralen Fertigungseinheit, z.B. dem Packer 11, im Produktionsprozess vorangehende Fertigungseinheit, also der Maker 10, derart mit der zentrale Fertigungseinheit gekoppelt ist, dass der Maker 10 nicht mehr Produkte fertigt als der Packer 11 verarbeiten kann. Im Produktionsprozess nachfolgende Fertigungseinheiten, also Folieneinschlagmaschine 12 und Stangenpacker 13, sind derart an die zentrale Fertigungseinheit gekoppelt, dass sie mindestens die von der zentralen Fertigungseinheit mittel- oder unmittelbar gelieferten Produkte verarbeiten können. Im Einzelfall kann die Kopplung der Fertigungseinheiten untereinander durch Speicher, z.B. Zigarettenspeicher 16 und Packungsspeicher 22, gelockert sein. Die generelle Kopplung bleibt gleichwohl erhalten.

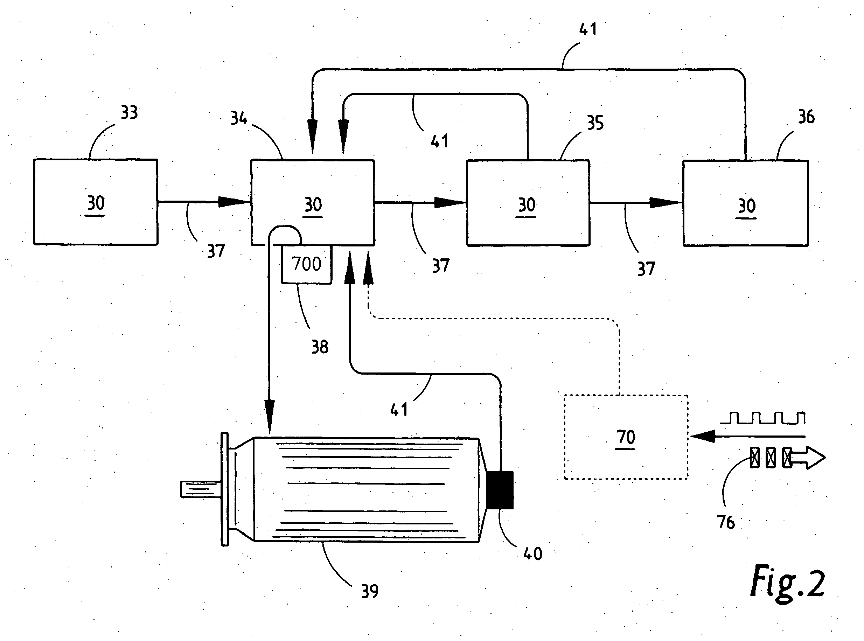

FIG 2 zeigt eine schematische Darstellung eines Ausschnitts der beschriebenen Linie. Der Betrieb jeder Fertigungseinheit wird von einer jeweiligen Steuerung 30 gesteuert. Eine erste Steuerung 30 - Makersteuerung 33 - ist zur Steuerung und/oder Überwachung des Makers 10 und eine zweite Steuerung 30 - Packersteuerung 34 - zur Steuerung und/oder Überwachung des Packers 11 vorgesehen. Weitere Steuerungen 30 - Cellosteuerung 35, Boxersteuerung 36 - sind zur Steuerung und/oder Überwachung der Folieneinschlagmaschine 12 bzw. des Stangenpackers 13 vorgesehen. In den einzelnen Steuerungen 30 ist in an sich bekannter Weise ein Steuerungsprogramm hinterlegt, nach dessen Maßgabe die einzelnen Fertigungseinheiten zur Durchführung des jeweiligen Produktions- und/oder Verpackungsprozesses mittels vorgebbarer Ausgangswerte an Ausgängen der Steuerungen 30 ansteuerbar sind. Die Koordination der Fertigungseinheiten basiert darauf, dass jede Fertigungseinheit an die jeweils nachfolgende Fertigungseinheit eine Geschwindigkeitsinformation 37 übermittelt. Die Geschwindigkeitsinformation 37 für die Cellosteuerung 35 und die Boxersteuerung 36 wird dabei von der als Leitsteuerung fungierenden Packersteuerung 34 von einer in einer Leistungs- oder Geschwindigkeitsvorgabeeinrichtung 38 hinterlegte Geschwindigkeits- oder Leistungsvorgabe, hier in Form einer Drehzahlobergrenze, z.B. 700 U/min, abgeleitet. Die Leistungsvorgabe wird von der Packersteuerung 34 an einen dem Packer 11 zugeordneten Antrieb 39 als Soll- oder Führungswert für dessen Geschwindigkeit übermittelt. Dem Antrieb 39, der insbesondere ein zentraler Antrieb der Fertigungseinheit ist, derart, dass die Fertigungseinheit weitere Antriebe umfasst, deren Geschwindigkeiten direkt oder indirekt von der Geschwindigkeit des zentralen Antriebs abhängen, ist ein Resolver 40 zur Aufnahme der Drehgeschwindigkeit zugeordnet. Über den Resolver 40 wird die Drehgeschwindigkeit, also z.B. die Drehzahl, an die Packersteuerung 34 übermittelt. Jeder weiteren Fertigungseinheit sind entsprechend dem beschriebenen Antrieb 39 nicht dargestellte eigene Antriebe zugeordnet, denen entsprechend der jeweiligen Geschwindigkeitsinformation 37 ein Soll- oder Führungswert für deren Geschwindigkeit und von denen die aktuelle Geschwindigkeit an die jeweilige Steuerung 30 übermittelt wird. Die Antriebe 39 sind Beispiele für aktivierbare Organe der einzelnen Fertigungseinheiten. Weitere aktivierbare Organe sind z.B. Pneumatik- oder Hydraulikaggregate oder Heizungen (nicht dargestellt), denen jeweils Sollwerte für deren Aktivierung und deren Status als Istwert an die jeweilige Steuerung 30 übermittelbar sind. An die Stelle einer Geschwindigkeitsvorgabe tritt bei beliebigen aktivierbaren Organen eine Leistungsvorgabe und an die Stelle der Geschwindigkeitsinformation 37 entsprechend eine Leistungsinformation.

Im Betrieb der Linie wird also der Antrieb 39 des Packers 11 mit einer durch die Leistungsvorgabeeinrichtung 38 vorgegebenen Nennleistung betrieben. Die erreichten Geschwindigkeiten des Antriebs 39 sowie der nachfolgenden Fertigungseinrichtungen werden als Geschwindigkeitsrückmeldung 41 an die Leitsteuerung übermittelt. Die Leitsteuerung vergleicht diese Geschwindigkeiten mit der Geschwindigkeitsvorgabe bzw. der Geschwindigkeitsinformation 37, der Geschwindigkeitsvorgabe für die Folgemaschinen. Bei einer Abweichung zwischen der gemeldeten Geschwindigkeit und der vorgegebenen Geschwindigkeit, insbesondere bei einer ein vorgegebenes Maß überschreitenden Abweichung, aus der auf eine Manipulation zum Erreichen einer höheren Produktionsleistung geschlossen werden kann, werden durch die Leitsteuerung vorgegebene Maßnahmen ausgelöst. Diese Maßnahmen umfassen z.B. eine Reduktion der Leistung einzelner oder aller Fertigungseinheiten, z.B. eine Reduktion der Geschwindigkeit des Antriebs 39.

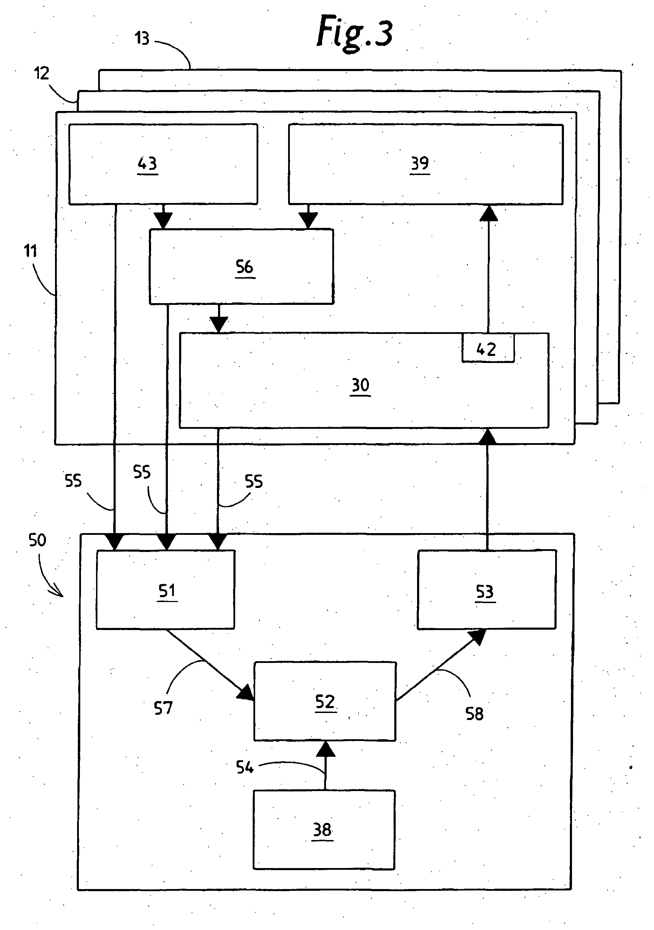

FIG 3 zeigt eine weitere schematische Darstellung der beschriebenen Linie mit einer Anzahl Fertigungseinheiten, also z.B. Packer 11, Folieneinschlagmaschine 12 und Stangenpacker 13. Jede Fertigungseinheit weist zumindest ein aktivierbares Organ, also z.B. den Antrieb 39, auf. Der Betrieb der oder jeder Fertigungseinheit wird von einer Steuerung 30 gesteuert. Dazu ist ein Steuerungsprogramm vorgesehen, nach dessen Maßgabe die einzelnen Fertigungseinheiten bzw. die aktivierbaren Organe zur Durchführung eines Produktions- und/oder Verpackungsprozesses mittels vorgebbarer Ausgangswerte an Ausgängen 42 der Steuerung 30 ansteuerbar sind. Das aktivierbare Organ beeinflusst eine Funktionseinheit 43 der Fertigungseinheit, z.B. indem die Funktionseinheit 43 vom Antrieb 39 angetrieben wird. Die Steuerung ist also zur Bildung von Leistungsdaten 55 anhand von Geschwindigkeiten ausgewählter Antriebe 39 und/oder Produktionsmengen einzelner oder alle Fertigungseinheiten vorgesehen.

Zur Begrenzung der Leistung der Produktions- und/oder Verpackungsanlage auf eine einem Betreiber der Anlage zugesicherte und von diesem erworbene Nennleistung ist eine Leistungskontrolleinrichtung 50 mit einer Leistungserkennungseinrichtung 51, einer Leistungsvorgabeeinrichtung 38 (vgl. auch Fig. 2), einem Vergleicher 52 und einer Leistungsbegrenzungseinrichtung 53 vorgesehen. Die Leistungsvorgabeeinrichtung 38 ist zum Erzeugen eines leistungsbezogenen Sollwertes 54 anhand der Nennleistung vorgesehen. Die Leistungserkennungseinrichtung 51 ist zum Empfang von Leistungsdaten 55 entweder von einer der jeweiligen Fertigungseinheit zugeordneten Sensorik 56, also z.B. dem Resolver 40, oder von der Fertigungseinheit oder der der Fertigungseinheit zugeordneten Steuerung 30 sowie zum Erzeugen eines leistungsbezogenen Istwertes 57 anhand der Leistungsdaten 55 vorgesehen. Der Vergleicher 52 ist zum Vergleichen von leistungsbezogenem Istwert 57 und leistungsbezogenem Sollwert 54 und, falls der leistungsbezogene Istwert 57 den leistungsbezogenen Sollwert 54 überschreitet, zur Generierung eines Aktivierungssignals 58 für die Leistungsbegrenzungseinrichtung 53 vorgesehen. Die Leistungsbegrenzungseinrichtung 53 schließlich dient zum Auslösen der erwähnten Maßnahmen, also z.B. zum Verringern der Leistung einzelner oder aller Fertigungseinheiten 10 bei anstehendem Aktivierungssignal 58. Dazu beeinflusst die Leistungsbegrenzungseinrichtung 53 die Steuerung 30, ggf. auch mehrere Steuerungen 30. Die Beeinflussung kann sich auf einzelne oder mehrere Ausgangswerte oder Ausgänge 42 beziehen und dabei z.B. eine Aktivierung und/oder Deaktivierung einzelner oder mehrerer Ausgangswerte oder Ausgänge 42 umfassen. Die Steuerung ist also zur Überprüfung der Leistungsbegrenzungseinrichtung 50 und zum Anhalten einzelner oder aller Fertigungseinheiten bei fehlgeschlagener Überprüfung vorgesehen. Diese Aktivierung oder Deaktivierung von Ausgangswerten oder Ausgänge kann von der Aktivierung oder Deaktivierung dieser Ausgangswerte oder Ausgänge 42 durch das Steuerungsprogramm abweichen, derart, dass die Leistungsbegrenzungseinrichtung 53 Maßnahmen der Steuerung 30 oder des Steuerungsprogramms "überschreibt". Das Aktivierungssignal 58 kann ein digitales Aktivierungssignal 58 sein, wobei bei anstehendem Aktivierungssignal 58 die Leistung einzelner oder aller Fertigungseinheiten um ein vorgegebenes Maß verringert wird. Das Aktivierungssignal 58 kann alternativ auch ein analoges Aktivierungssignal 58 sein, wobei die Stärke des Aktivierungssignals 58 aus der Abweichung von leistungsbezogenem Istwert 57 und leistungsbezogenem Sollwert 54 abgeleitet wird und das Maß der Leistungsverringerung vorgibt.

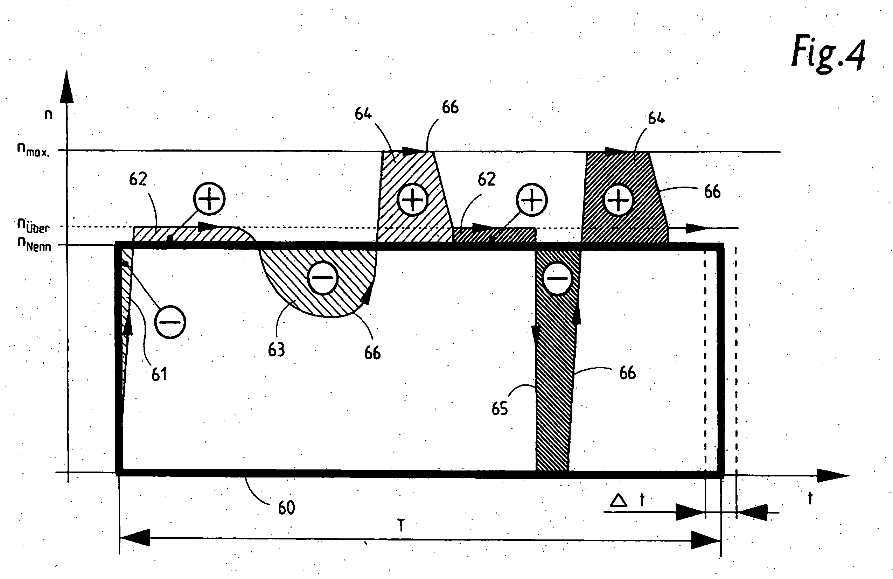

Eine Ausgestaltung der Erfindung wird anhand von Fig. 4 erläutert. Die Leistungsbegrenzung bei diesem Ausführungsbeispiel bezieht sich auf eine Fertigung einer Anzahl ordnungsgemäßer (Zigaretten-)Packungen, sogenannte Gutpackungen, während einer bestimmten Zeiteinheit T, z.B. einer Schicht. Die Zeiteinheit T ist über einer Zeitachse t aufgetragen. Die Anzahl der jeweils gefertigten Packungen korrespondiert mit einer Drehzahl eines zentralen Antriebs der Linie, also z.B. des Antriebs 39. Die Drehzahl n ist auf der Ordinate abgetragen. Ferner sind auf der Ordinate eine Maximaldrehzahl nₘₐₓ, eine Nenndrehzahl n_{Nenn} sowie eine Überdrehzahl n_{Über} aufgetragen. Die Nenndrehzahl n_{Nenn} korrespondiert mit der Drehzahl des zentralen Antriebs, bei der eine zugesicherte Anzahl von Gut-Packungen (Nennproduktion) produziert werden kann. Die Maximaldrehzahl nₘₐₓ ist diejenige Drehzahl, mit der der zentrale Antrieb maximal betrieben werden kann. Die vorgegebene Leistung entspricht dem mathematischen Produkt aus einer bei der Nenndrehzahl n_{Nenn} gefertigten Anzahl von Packungen und der Zeiteinheit T und ist graphisch als fett umrandeter Bereich 60 dargestellt. Diese vorgegebene Leistung soll erfüllt werden, ohne dass durch Manipulation eine darüber hinaus gehende Mehrleistung abrufbar ist.

Beim Anfahren der Linie, also beim zügigen Erhöhen der Drehzahl n des zentralen Antriebs ausgehend von Null in Richtung auf die Nenndrehzahl n_{Nenn} ergibt sich eine Anfahrrampe 61. Während der Anfahrrampe 61 kann die geforderte Packungszahl noch nicht gefertigt werden. Eine tatsächliche Packungszahl unterhalb der geforderten Packungszahl wird mit dem Symbol "Minus im Kreis" dargestellt. Nach dem erstmaligen Erreichen der Nenndrehzahl n_{Nenn} wird diese zunächst überschritten und die Linie mit der Überdrehzahl n_{Über} betrieben. Damit werden während der Dauer des Anstehens der Überdrehzahl n_{Über} mehr Packungen produziert als gefordert. Mit der Überdrehzahl n_{Über} korrespondiert also eine beabsichtigte Überproduktion 62 zu Beginn der Zeiteinheit T als Reserve für eine evtl. Verschlechterung der Produktionsergebnisse im weiteren Verlauf der Zeiteinheit T. Eine tatsächliche Packungszahl oberhalb der geforderten Packungszahl wird mit dem Symbol ⊕ (Plus im Kreis) dargestellt. Im dargestellten Ausführungsbeispiel schließt an den Zeitraum der beabsichtigten Überproduktion 62 ein hinsichtlich seiner Dauer nicht vorhersehbarer Zeitraum einer Schlechtpaketeproduktion 63 an. Während dieses Zeitraums wird die geforderte Packungszahl nicht erreicht. Im Anschluss an die Schlechtpaketeproduktion 63 wird die Linie mit einer mit der Maximaldrehzahl nₘₐₓ korrespondierenden Maximalleistung 64 betrieben, um die durch die Schlechtpacketeproduktion 63 bedingte Defizite wieder auszugleichen (beim Wechsel der Schraffur ist die Schlechtpaketeproduktion 63 ausgeglichen). Sobald das Defizit ausgeglichen ist, wird die Linie im Bereich der beabsichtigten Überproduktion 62 betrieben, um eine Reserve für eventuelle Produktionsausfälle im weiteren Verlauf der Zeiteinheit T anzusammeln. Tatsächlich ist im Ausführungsbeispiel im Anschluss an diese zweite beabsichtigte Überproduktion 62 auch die Situation eines Totalausfalls 65 gezeigt, bei dem also gar keine Zigarettenpackungen produziert werden. Im Anschluss an die Beseitigung dieses Totalausfalls 65 wird die Linie wiederum mit Maximalleistung 64 betrieben, um das Defizit während des Totalausfalls 65 auszugleichen. Am Ende der Zeiteinheit T ist auf diese Weise im Mittel genau die zugesicherte Nennproduktion erreicht. Sollte die geforderte Menge am Ende der Zeiteinheit T nicht erreicht sein, ist eine automatische Vergrößerung der Zeiteinheit T innerhalb einer vorgegebenen Toleranz vorgesehen. Sollte die geforderte Produktion bereits vor Ende der Zeiteinheit T erreicht sein, wird die Produktion auch vor Ende der Zeiteinheit T nach Erreichen der geforderten Nennproduktion beendet. Die Zeit, um die auf diese Weise die Zeiteinheit T verlängert oder verkürzt werden kann, ist in der Zeichnung mit Δt bezeichnet. Die Fläche unter dem Graph 66 der Anzahl der Gutpackungen korrespondiert mit der Fläche des Bereichs 60, der durch Nenndrehzahl n_{Nenn} und Zeiteinheit T aufgespannt wird.

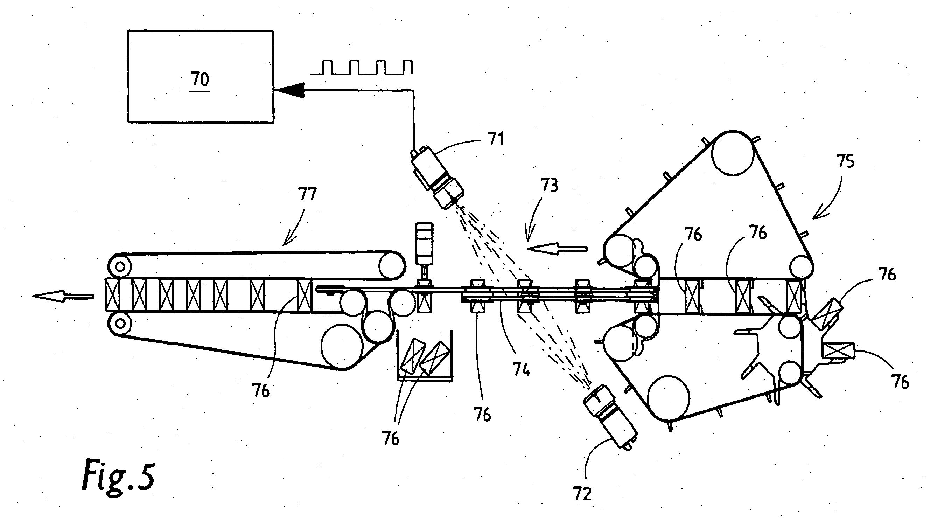

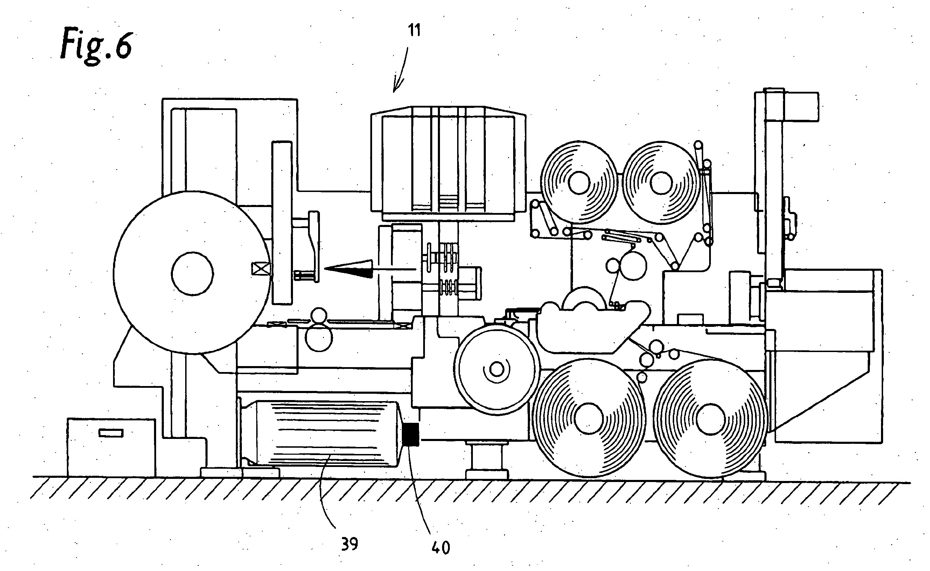

Die Anzahl der Gutpackungen, die in der Darstellung gemäß Fig. 4 über der Abszisse aufgetragen ist, wird von einer Zählsteuerung 70 ermittelt. Diese ist schematisch in Fig. 5 dargestellt. Die Zählsteuerung 70 erhält für jede Gutpackung einen Impuls von Prüforganen, nämlich Kameras 71, 72, die je oberhalb und unterhalb einer Förderstrecke 73 angeordnet sind. Die Förderstrecke 73 gehört zu einem Prüfförderer 74, der zwischen einem Zuförderer 75 und einem Abförderer 77 angeordnet ist. Zuförderer 75, Prüfförderer 74 und Abförderer 77 sowie die Prüforgane und deren Wirkungsweise sind in der DE 198 39 852 A1 beschrieben. Zigarettenpackungen 76, die von den Prüforganen als nicht ordnungsgemäß ermittelt wurden (Schlechtpackungen) werden ausgesondert. Zuförderer 75, Prüfförderer 74 und Abförderer 77 sowie die Prüforgane sind Bestandteil einer in einer schematischen Gesamtansicht in Fig. 6 dargestellten Verpackungsmaschine, also eines Packers 11, insbesondere eines sogenannten Hinge-Lid-Packers, an der mit dem Pfeil gekennzeichneten Position. Der Packer 11 umfasst den Antrieb 39, der den zentralen Antrieb der Linie bildet, weil auf dessen Geschwindigkeit alle weiteren Geschwindigkeiten von Antrieben und beweglichen Organen weiterer Fertigungseinheiten abgestimmt sind.

Die Zählsteuerung 70 ist bereits in Fig. 2 gezeigt (gestrichelt dargestellt). Das von der Zählsteuerung 70 gelieferte Signal über die Anzahl der Gutpackungen wird der Packersteuerung 34 zugeführt, die daraus die erforderliche Drehzahl n des Antriebs 39 ermittelt, um während der Zeitspanne T insgesamt eine zugesicherte Anzahl von Gutpackungen, die zugesicherte Leistung, zu erhalten. Die ermittelte erforderliche Drehzahl korrespondiert in der Darstellung in Fig. 4 mit dem die Flächen der beabsichtigten Überproduktion 62 und der Maximalleistung 64 begrenzenden Graph 66. Für den Abschnitt der Schlechtproduktion 63 und des Totalausfalls liegt die ermittelte erforderliche Drehzahl zwischen der Nenndrehzahl n_{Nenn} und der Maximaldrehzahl nₘₐₓ, insbesondere zwischen der Überdrehzahl n_{Über} und der Maximaldrehzahl nₘₐₓ. Der Ermittlung der erforderlichen Drehzahl liegt insbesondere ein Regelungsalgorithmus zugrunde, der als Sollwert die mit der Nenndrehzahl n_{Nenn} korrespondierende Nennstückzahl an Gutpackungen, als Istwert die tatsächliche Anzahl gefertigter Gutpackungen verarbeitet und als Stellwert eine Drehzahl n für den Antrieb 39 liefert. Der Regelalgorithmus ist z.B. ein proportionaler, proportionalintegraler oder proportional-differentieller Regelalgorithmus oder ergibt sich aus Kombinationen dieser Algorithmen. Gleichfalls kann der Regelungsalgorithmus auch auf der sogenannten Fuzzy-Regelung beruhen. Der Sollwert, also die Anzahl zu fertigender Gutpackungen ist als Nennproduktion mittels einer Leistungsvorgabeeinrichtung 38 vorgebbar.

Die Überwachung der Vorgabe der zu fertigenden Anzahl Gutpackungen - also das Erkennen einer evtl. Manipulation der Nenndrehzahl n_{Nenn} - erfolgt durch den Regelungsalgorithmus selbst. Wenn also durch eine Manipulation die Nenndrehzahl n_{Nenn} erhöht wird, erfolgt zunächst eine Produktion von Zigarettenpackungen entsprechend dieser erhöhen Drehzahl, tatsächlich sogar entsprechend der noch über der manipulierten Drehzahl liegenden Überdrehzahl n_{Über}. Entlang des Zeitabschnitts T wird damit in jedem Zeitpunkt eine über der Nennproduktion liegende Menge von Zigarettenpackungen produziert. Dies kompensiert der Regelungsalgorithmus anlog zu einer Schlechtproduktion 63 oder einem Totalausfall 65 mit einer Anpassung der Drehzahl n des Antriebs 39. Die Kompensation bewirkt in diesem Falle allerdings eine Verringerung der Drehzahl n. Dies führt im Ergebnis dazu, dass entlang des Zeitintervalls T trotz der Manipulation keine größere Anzahl von Packungen gefertigt wird. Die aufgrund der Manipulation möglich gewordene Mehrproduktion am Anfang des Zeitintervalls T wird durch eine entsprechende Minderproduktion am Ende des Zeitintervalls T, bewirkt durch eine Verringerung der Drehzahl des Antriebs 39 oder ein Abschalten des Antriebs 39, also eine Verkürzung des Zeitintervalls T, kompensiert. Zum Erreichen dieser Funktionalität kann die bereits beschriebene Leistungskontrolleinrichtung 50 verwendet werden, wobei die Leistungserkennungseinrichtung 51 von der Zählsteuerung 70 die Anzahl der gefertigten Gutpackungen erhält. Diese wird durch den Vergleicher 52 mit der Anzahl der zu fertigenden Gutpackungen, die in der Leistungsvorgabeeinrichtung 38 manipulationssicher hinterlegt ist, verglichen. Ist die geforderte Anzahl Gutpackungen erreicht, wird der Antrieb 39 unter Einfluss der Leistungsbegrenzungseinrichtung 53 abgeschaltet, also das Zeitintervall T verkürzt. Der Vergleicher 52 muss nicht notwendig den jeweiligen Momentanwert der Anzahl der gefertigten Gutpackungen in Betracht ziehen, sondern kann auch mittels Interpolation aus der während einer bestimmten Zeitspanne gefertigten Anzahl von Gutpackungen erkennen, wann die vorgegebene Anzahl von Gutpackungen erreicht sein wird, so dass unter Einfluss der Leistungsbegrenzungseinrichtung 53 die Drehzahl des Antriebes 39 kontinuierlich verringert werden kann, so dass am Ende des Zeitintervalls ohne "hartes Abschalten" des Antriebs trotz der Manipulation nur die geforderte Menge von Gutpackungen produziert ist. Der Wert der Überdrehzahl n_{Über} oder eine vorgegebene Dauer der beabsichtigten Überproduktion 62 ist bevorzugt variabel und wird vom Regelungsalgorithmus beeinflusst.

Wenn nach einer Anzahl von Zeitintervallen T stets die geforderte Nennproduktion vor Ende des Zeitintervalls T erreicht wird, kann die Überdrehzahl n_{Über} und/oder die Dauer der beabsichtigten Überproduktion 62 entsprechend einem separaten Regelungsalgorithmus verringert werden. Wenn dagegen während einer Anzahl von Zeitintervallen T stets die Produktion über die eigentliche Länge des Zeitintervalls T hinaus ausgedehnt werden muss, kann die Überdrehzahl n_{Über} und/oder die Dauer der beabsichtigten Überproduktion 62 entsprechend einem separaten Regelungsalgorithmus erhöht werden.

### Bezugszeichenliste:

- 10: Maker
- 11: Packer
- 12: Folieneinschlagmaschine
- 13: Stangenpacker
- 14: Kartonierer
- 15: Zigarettenförderer
- 16: Zigarettenspeicher
- 17: Zuschnittspeicher
- 18: Packungsförderer
- 21: Versandkartonabförderer
- 22: Packungsspeicher
- 23: Filteransetzmaschine
- 24: Materiallager
- 25: Materialförderer
- 26: Bobine
- 27: Förderband
- 30: Steuerung
- 31: Bus
- 32: Steuerung
- 33: Makersteuerung
- 34: Packersteuerung
- 35: Cellosteuerung
- 36: Boxersteuerung
- 37: Geschwindigkeitsinformation
- 38: Leistungs- oder Geschwindigkeitsvorgabeeinrichtung
- 39: Antrieb
- 40: Resolver
- 41: Geschwindigkeitsrückmeldung
- 42: Ausgang
- 43: Funktionseinheit
- 50: Leistungskontrolleinrichtung
- 51: Leistungserkennungseinrichtung
- 52: Vergleicher
- 53: Leistungsbegrenzungseinrichtung
- 54: Sollwert
- 55: Leistungsdaten
- 56: Sensorik
- 57: Istwert
- 58: Aktivierungssignal
- 60: umrandeter Bereich
- 61: Anfahrrampe
- 62: Überproduktion
- 63: Schlechtpaketeproduktion
- 64: Maximalleistung
- 65: Totalausfall
- 66: Graph
- 70: Zählsteuerung
- 71: Kamera
- 72: Kamera
- 73: Förderstrecke
- 74: Prüfförderer
- 75: Zuförderer
- 76: Zigarettenpackung
- 77: Abförderer

## Patentansprüche

1. Produktions- und/oder Verpackungsanlage, insbesondere zur Produktion und/oder Verpackung von Zigaretten, mit einer Anzahl von Fertigungseinheiten, insbesondere Maker (10), Packer (11), Folieneinschlagmaschine (12) und einen Stangenpacker (13), wobei jeder Fertigungseinheit einzeln oder allen Fertigungseinheiten gemeinsam eine zum Aufnehmen von Leistungsdaten vorgesehene Sensorik (56) zugeordnet ist, **gekennzeichnet durch** eine zur Skalierung der von der Anlage abrufbaren Produktions- oder Verpackungsleistung vorgesehene Leistungskontrolleinrichtung (50) mit einer Leistungserkennungseinrichtung (51), einer Leistungsvorgabeeinrichtung (38), einem Vergleicher (52) und einer Leistungsbegrenzungseinrichtung (53), wobei die Leistungsvorgabeeinrichtung (38) zum Erzeugen eines leistungsbezogenen Sollwertes (54) anhand einer einem Betreiber der Produktions- und/oder Verpackungsanlage zugesicherten Leistung im Hinblick auf die von der Anlage abrufbare Produktions- oder Verpackungsleistung vorgesehen ist, nämlich im Hinblick auf eine Anzahl in einem vorgegebenen oder vorgebbaren Zeitabschnitt produzierbarer, ordnungsgemäßer Packungen, wobei die Leistungserkennungseinrichtung (51) zum Empfang von Leistungsdaten (55), insbesondere von der Sensorik (56), und zum Erzeugen eines leistungsbezogenen Istwertes (57) anhand der Leistungsdaten (55) vorgesehen ist, wobei der Vergleicher (52) zum Vergleichen von leistungsbezogenem Istwert (57) und leistungsbezogenem Sollwert (54) und, falls der leistungsbezogene Istwert (57) den leistungsbezogenen Sollwert (54) überschreitet, zur Generierung eines Aktivierungssignals (58) für die Leistungsbegrenzungseinrichtung (53) vorgesehen ist und wobei die Leistungsbegrenzungseinrichtung (53) zum Verringern der Leistung einzelner oder aller Fertigungseinheiten vorgesehen ist.

2. Produktions- und/oder Verpackungsanlage nach Anspruch 1, **gekennzeichnet durch** eine zur Steuerung der Fertigungseinheiten vorgesehene Steuerung (30), wobei die Leistungserkennungseinrichtung (51) zum Empfang von Leistungsdaten (55) von der Sensorik (56) und der Steuerung (30) und/oder zur Auswertung von Leistungsdaten (55) von allen Fertigungseinheiten, nämlich ggf. Zigarettenherstellungsmaschine (Maker 10) sowie Verpackungsmaschine (Packer 11) und ggf. Folieneinschlagmaschine (12) und Stangenpacker (13) vorgesehen ist.

3. Produktions- und/oder Verpackungsanlage nach Anspruch 2, **dadurch gekennzeichnet, dass** das Verringern der Leistung einzelner oder aller Fertigungseinheiten mittels einer Beeinflussung der Steuerung (30) vorgesehen ist, wobei die Steuerung (30) zur Ausführung eines Steuerprogramms vorgesehen ist, nach dessen Maßgabe die einzelnen Fertigungseinheiten zur Durchführung eines Produktions- und/oder Verpackungsprozesses mittels vorgebbarer Ausgangswerte an Ausgängen (42) der Steuerung (30) ansteuerbar sind, wobei die Beeinflussung der Steuerung (30) die Beeinflussung einzelner Ausgangswerte oder Ausgänge (42) umfasst.

4. Produktions- und/oder Verpackungsanlage nach Anspruch 3, **dadurch gekennzeichnet, dass** einzelne Ausgangswerte oder Ausgänge (42) als digitale Ausgangswerte oder Ausgänge (42) zur Aktivierung oder Deaktivierung einzelner Aktionen an der mit dem jeweiligen Ausgangswert oder Ausgang (42) beaufschlagten Fertigungseinheit vorgesehen sind und dass die Beeinflussung einzelner Ausgangswerte oder Ausgänge (42) eine von der Aktivierung oder Deaktivierung dieser Ausgangswerte oder Ausgänge (42) durch das Steuerungsprogramm abweichende Aktivierung oder Deaktivierung dieser Ausgangswerte oder Ausgänge (42) umfasst.

5. Produktions- und/oder Verpackungsanlage nach Anspruch 3, **dadurch gekennzeichnet, dass** einzelne Ausgangswerte oder Ausgänge (42) als analoge Ausgangswerte oder Ausgänge (42) zur Vorgabe von analogen Sollwerten an der mit dem jeweiligen Ausgangswert oder Ausgang (42) beaufschlagten Fertigungseinheit vorgesehen sind und dass die Beeinflussung einzelner Ausgangswerte oder Ausgänge (42) eine von der Sollwertvorgabe dieser Ausgangswerte oder Ausgänge (42) durch das Steuerungsprogramm abweichende Sollwertvorgabe umfasst.

6. Verfahren zum Betrieb einer Produktions- und/oder Verpackungsanlage nach Anspruch 1, **dadurch gekennzeichnet, dass** eine einer Fertigungseinheit zugeordnete Steuerung (30) von der Leistungsvorgabeeinrichtung (38) eine Leistungsvorgabe im Hinblick auf eine von der Anlage abrufbare Produktions- oder Verpackungsleistung erhält, nämlich im Hinblick auf eine Anzahl in einem vorgegebenen oder vorgebbaren Zeitabschnitt produzierbarer, ordnungsgemäßer Packungen, dass ein der Fertigungseinheit zugeordneter Antrieb (39) entsprechend der Leistungsvorgabe angesteuert wird, dass eine Drehzahl des Antriebs (39) ermittelt wird und mit der Leistungsvorgabe verglichen wird und dass bei einer Abweichung zwischen Leistungsvorgabe und ermittelter Drehzahl des Antriebs (39) vorgegebene Maßnahmen, insbesondere ein Abschalten des Antriebs (39) oder eine Reduzierung der Drehzahl des Antriebs (39), eingeleitet werden.

7. Verfahren nach Anspruch 6, **dadurch gekennzeichnet, dass** aus der Leistungsvorgabe Geschwindigkeitsinformation (37) für im Produktionsprozess nachfolgende Fertigungseinheiten abgeleitet und an die Fertigungseinheiten übermittelt werden, dass von den nachfolgenden Fertigungseinheiten Geschwindigkeitsrückmeldungen (41) an die Steuerung (30) übermittelt werden, dass ein Vergleich einzelner oder aller Geschwindigkeitsinformationen (37) mit den jeweils zugehörigen Geschwindigkeitsrückmeldungen (41) erfolgt und dass bei einer Abweichung zwischen Geschwindigkeitsinformation (37) und zugehöriger Geschwindigkeitsrückmeldung (41) vorgegebene Maßnahmen, insbesondere ein Abschalten des Antriebs (39), eine Reduzierung der Drehzahl der Antriebs (39) oder ein Abschalten der jeweiligen Fertigungseinheit, eingeleitet werden.

8. Verfahren nach Anspruch 6 oder 7, **dadurch gekennzeichnet, dass** ein der Fertigungseinheit zugeordneter Antrieb (39) entsprechend der Leistungsvorgabe während eines vorgegebenen oder vorgebbaren Zeitintervalls (T) hinsichtlich seiner Drehzahl (n) folgendermaßen angesteuert wird:
- zu Beginn des Zeitintervalls wird die Drehzahl (n) in Richtung auf eine mit der Leistungsvorgabe korrespondierende Nenndrehzahl (n_{Nenn}) erhöht,
- nach Erreichen der Nenndrehzahl (n_{Nenn}) wird die Drehzahl (n) für eine vorgegebene oder vorgebbare Zeitspanne weiter bis zu einer Überdrehzahl (n_{Über}) erhöht,
- während des Zeitintervalls (T) wird die Anzahl von Gutpackungen insbesondere kontinuierlich erfasst und mit einer der Leistungsvorgabe entsprechenden Nennproduktion verglichen,
- wobei die Drehzahl (n) verringert wird, wenn die Anzahl der Gutpackungen die Nennproduktion um ein vorgegebenes oder vorgebbares Maß übersteigt oder die Drehzahl (n) erhöht wird, wenn die Anzahl der Gutpackungen die Nennproduktion um ein vorgegebenes oder vorgebbares Maß unterschreitet und
- wobei insbesondere die Produktion beendet wird, wenn vor Ende des Zeitintervalls (T) die geforderte Anzahl Gutpackungen erreicht ist, und/oder die Produktion fortgesetzt wird, wenn bei Ende des Zeitintervalls (T) die geforderte Anzahl Gutpackungen nicht erreicht ist.

9. Verfahren nach Anspruch 8, **dadurch gekennzeichnet, dass** der Wert der Überdrehzahl (n_{Über}) und/oder die Dauer der Produktion mit der Überdrehzahl (n_{Über}) - beabsichtigte Überproduktion (62) - in Abhängigkeit vom Erreichen der geforderten Anzahl Gutpackungen zum Ende des Zeitintervalls (T) veränderlich ist.

10. Verfahren nach einem der Ansprüche 6 bis 9, **dadurch gekennzeichnet, dass** eine kurzfristige Erhöhung der Leistungsvorgabe vorgesehen ist, wobei der Betreiber einen Code zum Bewirken der Leistungserhöhung erwirbt und in die Steuerung (30) eingibt, wobei der eingegebene Code mit in der Steuerung (30) gespeicherten Codes verglichen wird und bei Übereinstimmung die Leistungserhöhung entsprechend dem Code ausgelöst wird.

## Claims

1. Production and/or packaging installation, in particular for producing and/or packaging cigarettes, having a number of production units, in particular a maker (10), packer (11), film-wrapping machine (12) and a multipacker (13), each production unit or all the production units being assigned a sensor system (56) provided for picking up performance data, **characterized by** a performance-monitoring device (50), which is provided for scaling the production or packaging performance level which can be retrieved by the installation, with a performance-detecting device (51), a performance-specifying device (38), a comparator (52) and a performance-limiting device (53), wherein the performance-specifying device (38) is provided for producing a performance-related desired value (54) with reference to a performance level which is guaranteed to an operator of the production and/or packaging installation with respect to the production or packaging performance level that can be retrieved by the installation, namely with respect to a number of acceptable packs that can be produced during a predetermined or predeterminable period of time, wherein the performance-detecting device (51) is provided for receiving performance data (55), in particular from the sensor system (56), and for producing a performance-related actual value (57) with reference to the performance data (55), wherein the comparator (52) is provided for comparing the performance-related actual value (57) and performance-related desired value (54) and, if the performance-related actual value (57) exceeds the performance-related desired value (54), for generating an activating signal (58) for the performance-limiting device (53), and wherein a performance-limiting device (53) is provided for reducing the performance level of individual production units or of all the production units.

2. Production and/or packaging installation according to Claim 1, **characterized by** a control means (30) which is provided for controlling the production units, the performance-detecting device (51) being provided for receiving performance data (55) from the sensor system (56) and the control means (30) and/or for evaluation of the performance data (55) from all the production units, namely, if appropriate, the cigarette-production machine (maker 10) and packaging machine (packer 11) and, if appropriate, the film-wrapping machine (12) and multipacker (13).

3. Production and/or packaging installation according to Claim 2, **characterized in that** the performance level of individual production units or of all the production units is reduced by virtue of the control means (30) being influenced, the control means (30) being provided for executing a control program, in accordance with which it is possible to activate the individual production units for carrying out a production and/or packing process by means of predeterminable output values at outputs (42) of the control means (30), the influencing of the control means (30) comprising the influencing of individual output values or outputs (42).

4. Production and/or packaging installation according to Claim 3, **characterized in that** individual output values or outputs (42) are provided as digital output values or outputs (42) for activating or deactivating individual actions at the production unit affected by the respective output value or output (42), and that the influencing of individual output values or outputs (42) comprises an activation or deactivation of these output values or outputs (42) which deviates from the activation or deactivation of these output values or outputs (42) by the control program.

5. Production and/or packaging installation according to Claim 3, **characterized in that** individual output values or outputs (42) are provided as analogue output values or outputs (42) for specifying analogue desired values at the production unit affected by the respective output value or output (42), and that influencing of individual output values or outputs (42) comprises a specified desired value which differs from the desired value of these output values or outputs (42) specified by the control program.

6. Method of operating a production and/or packaging installation according to Claim 1, **characterized in that** a control means (30) assigned to a production unit obtains, from the performance-specifying device (38), a specified performance value with respect to a production or packaging performance level that can be retrieved by the installation, namely with respect to a number of acceptable packs that can be produced during a predetermined or predeterminable period of time, **in that** a drive (39) assigned to the production unit is activated in accordance with the specified performance value, **in that** a speed of the drive (39) is determined and compared with the specified performance value, and **in that**, in the case of a difference between the specified performance value and speed determined for the drive (39), predetermined measures are initiated, in particular the drive (39) is switched off or the speed of the drive (39) is reduced.

7. Method according to Claim 6, **characterized in that** speed-related information (37) for subsequent production units in the production process are derived from the specified performance value and transmitted to the production units, **in that** speed-related feedback (41) is transmitted from the subsequent production units to the control means (30), **in that** individual pieces of speed-related information (37) or all the pieces of speed-related information (37) are compared with the respectively associated speed-related feedback (41), and **in that**, in the case of a difference between the speed-related information (37) and associated speed-related feedback (41), predetermined measures are initiated, in particular the drive (39) is switched off, the speed of the drive (39) is reduced or the respective production unit is switched off.

8. Method according to Claim 6 or 7, **characterized in that** a drive (39) assigned to the production unit is activated for a predetermined or predeterminable time interval (T) in accordance with a specified performance value, in respect of its speed (n), as follows:
- at the beginning of the time interval, the speed (n) is increased in the direction of a nominal speed (nₙₒₘ) corresponding to the specified performance value,
- once the nominal speed (nₙₒₘ) has been reached, the speed (n) is increased further, for a predetermined or predeterminable period of time, up to an excess speed (nₑₓ),
- during the time interval (T), the number of acceptable packs is sensed, in particular continuously, and compared with nominal production corresponding to the specified performance value,
- the speed (n) being reduced if the number of acceptable packs exceeds the nominal production by a predetermined or predeterminable amount, or the speed (n) being increased if the number of acceptable packs falls below the nominal production by a predetermined or predeterminable amount, and
- in particular, production is terminated if the required number of acceptable packs has been reached prior to the end of the time interval (T) and/or production is continued if the required number of acceptable packs has not been reached at the end of the time interval (T).

9. Method according to Claim 8, **characterized in that** it is possible to change the value of the excess speed (nₑₓ) and/or of the duration of the production at the excess speed (nₑₓ) - intended excess production (62) - as a function of the required number of acceptable packs being reached at the end of the time interval (T).

10. Method according to one of Claims 6 to 9, **characterized in that** a brief increase in the specified performance value is provided, the operator acquiring a code in order to achieve the performance-level increase and entering it into the control means (30), the entered code being compared with codes stored in the control means (30) and, in the case of correspondence, the performance-level increase being initiated in accordance with the code.

## Revendications

1. Machine de production et/ou d'emballage, en particulier pour la production et/ou l'emballage de cigarettes, comportant plusieurs unités de fabrication, en particulier des machines de fabrication (10), d'emballage (11), d'insertion de feuille (12) et une emballeuse de barres (13), dans laquelle des capteurs (56) prévus pour l'enregistrement de données de capacité sont associés à chaque unité de fabrication individuellement ou à toutes les unités de fabrication en commun, **caractérisée par** un dispositif de contrôle de capacité (50) prévu pour l'adaptation de la capacité de production ou d'emballage appelable par la machine, avec un dispositif de reconnaissance de capacité (51), un dispositif de prévision de capacité (38), un comparateur (52) et un dispositif de limitation de capacité (53), dans laquelle le dispositif de prévision de capacité (38) est prévu pour la production d'une valeur de consigne liée à la capacité (54) à l'aide d'une capacité assurée à un exploitant de la machine de production et/ou d'emballage en ce qui concerne la capacité de production et/ou d'emballage appelable par la machine, notamment en ce qui concerne un nombre de paquets réguliers pouvant être produits en un laps de temps prédéterminé ou prévisible, dans laquelle le dispositif de reconnaissance de capacité (51) est prévu pour la réception de données de capacité (55), en particulier en provenance des capteurs (56), et pour la production d'une valeur réelle liée à la capacité (57) à l'aide des données de capacité (55), dans laquelle le comparateur (52) est prévu pour la comparaison d'une valeur réelle liée à la capacité (57) et d'une valeur de consigne liée à la capacité (54) et, dans le cas où la valeur réelle liée à la capacité (57) dépasse la valeur de consigne liée à la capacité (54), pour la génération d'un signal d'activation (58) pour le dispositif de limitation de capacité (53) et dans laquelle le dispositif de limitation de capacité (53) est prévu pour la diminution de la capacité d'unités de fabrication individuelles ou de toutes les unités de fabrication.

2. Machine de production et/ou d'emballage selon la revendication 1, **caractérisée par** une commande (30) prévue pour la commande des unités de fabrication, dans laquelle le dispositif de reconnaissance de capacité (51) est prévu pour la réception de données de capacité (55) en provenance des capteurs (56) et de la commande (30) et/ou pour l'évaluation de données de capacité (55) en provenance de toutes les unités de fabrication, à savoir éventuellement la machine de fabrication de cigarettes (machine de fabrication 10) ainsi que la machine d'emballage (emballeuse 11) et éventuellement la machine d'insertion de feuille (12) et l'emballeuse de barres (13).

3. Machine de production et/ou d'emballage selon la revendication 2, **caractérisée en ce qu'**il est prévu de diminuer la capacité d'unités de fabrication individuelles ou de toutes les unités de fabrication en influençant la commande (30), dans laquelle la commande (30) est prévue pour exécuter un programme de commande, dans le cadre duquel les unités de fabrication individuelles peuvent être commandées au moyen de valeurs initiales prévisibles aux sorties (42) de la commande (30) pour l'exécution d'un processus de production et/ou d'emballage, dans laquelle l'influence exercée sur la commande (30) comprend l'influence exercée sur des valeurs initiales ou sur des sorties individuelles (42).

4. Machine de production et/ou d'emballage selon la revendication 3, **caractérisée en ce que** des valeurs initiales ou des sorties individuelles (42) sont prévues sous forme de valeurs initiales ou de sorties numériques (42) pour l'activation ou la désactivation d'actions individuelles sur l'unité de fabrication atteinte par la valeur initiale ou la sortie respective (42) et **en ce que** l'influence exercée sur des valeurs ou des sorties individuelles (42) comprend une activation ou une désactivation de ces valeurs ou de ces sorties individuelles (42) s'écartant de l'activation ou de la désactivation de ces valeurs initiales ou de ces sorties (42) par le programme de commande.

5. Machine de production et/ou d'emballage selon la revendication 3, **caractérisée en ce que** des valeurs initiales ou des sorties individuelles (42) sont prévues sous forme de valeurs initiales ou de sorties analogiques (42) pour la prévision de valeurs de consigne analogiques à l'unité de fabrication atteinte par la valeur initiale ou la sortie respective (42) et **en ce que** l'influence exercée sur les valeurs initiales ou les sorties individuelles (42) comprend une prévision de valeurs de consigne s'écartant de la prévision de valeurs de consigne de ces valeurs initiales ou de ces sorties (42) par le programme de commande.

6. Procédé de conduite d'une machine de fabrication et/ou d'emballage selon la revendication 1, **caractérisé en ce qu'**une commande (30) associée à une unité de fabrication reçoit du dispositif de prévision de capacité (38) une prévision de capacité en ce qui concerne une capacité de production ou d'emballage appelable par la machine, notamment en ce qui concerne un nombre de paquets réguliers pouvant être produits dans un laps de temps prédéterminé ou prévisible, **en ce que** l'on commande un entraînement (39) associé à l'unité de fabrication en fonction de la prévision de capacité, **en ce que** l'on détecte une vitesse de rotation de l'entraînement (39) et on la compare avec la prévision de capacité, et **en ce que**, en cas d'écart entre la prévision de capacité et la vitesse de rotation détectée de l'entraînement (39), on applique des mesures prédéterminées, en particulier un arrêt de l'entraînement (39) ou une diminution de la vitesse de rotation de l'entraînement (39).

7. Procédé selon la revendication 6, **caractérisé en ce que** l'on déduit de la prévision de capacité des informations de vitesse (37) pour des unités de fabrication suivantes dans le processus de production et on les transmet aux unités de fabrication, **en ce que** l'on transmet à la commande (30) des réponses de vitesse (41) provenant des unités de fabrication suivantes, **en ce que** l'on effectue une comparaison d'informations de vitesse individuelles ou complètes (37) avec les réponses de vitesse (41) respectivement correspondantes et, en cas d'écart entre les informations de vitesse (37) et les réponses de vitesse correspondantes (41), on applique des mesures prédéterminées, en particulier un arrêt de l'entraînement (39), une diminution de la vitesse de rotation de l'entraînement (39) ou un arrêt de l'unité de fabrication respective.

8. Procédé selon la revendication 6 ou 7, **caractérisé en ce que** l'on commande un entraînement (39) associé à l'unité de fabrication en fonction de la prévision de capacité pendant un intervalle de temps prédéterminé ou prévisible (T) en ce qui concerne sa vitesse de rotation (n), de la manière suivante:
- au début de l'intervalle de temps, on augmente la vitesse de rotation (n) en direction d'une vitesse de rotation nominale (nₙₒₘ) correspondant à la prévision de capacité,
- après avoir atteint la vitesse de rotation nominale (nₙₒₘ), on augmente encore la vitesse de rotation (n) pendant un laps de temps prédéterminé ou prévisible jusqu'à une survitesse de rotation (nₛᵤᵣᵥ),
- pendant l'intervalle de temps (T), on détecte notamment en continu le nombre de paquets d'articles et on le compare avec une production nominale correspondant à la prévision de capacité,
- dans lequel on réduit la vitesse de rotation (n), lorsque le nombre de paquets d'articles dépasse la production nominale dans une mesure prédéterminée ou prévisible ou on augmente la vitesse de rotation (n), lorsque le nombre de paquets d'articles est inférieur à la production nominale dans une mesure prédéterminée ou prévisible, et
- dans lequel on termine la production en particulier lorsque le nombre demandé de paquets d'articles est atteint avant la fin de l'intervalle de temps (T) et/ou on poursuit la production lorsque le nombre demandé de paquets d'articles n'est pas atteint à la fin de l'intervalle de temps (T).

9. Procédé selon la revendication 8, **caractérisé en ce que** la valeur de la survitesse de rotation (nₛᵤᵣᵥ) et/ou la durée de la production avec la survitesse de rotation (nₛᵤᵣᵥ) - surproduction visée (62) - est variable en fonction de la réalisation du nombre demandé de paquets d'articles à la fin de l'intervalle de temps (T).

10. Procédé selon l'une quelconque des revendications 6 à 9, **caractérisé en ce qu'**il est prévu une brève augmentation de la prévision de capacité, dans lequel l'exploitant acquiert un code pour provoquer une augmentation de capacité et il l'introduit dans la commande (30), dans lequel le code introduit est comparé à des codes mémorisés dans la commande (30) et en cas de concordance l'augmentation de capacité est déclenchée conformément au code.
